Europäisches Patentamt

European Patent Office

Office européen des brevets

(19)

(11) EP 1 528 722 A1

(12) EUROPEAN PATENT APPLICATION

(43) Date of publication:
04.05.2005 Bulletin 2005/18

(51) Int Cl.$^7$: H04L 12/56, H04L 29/06

(21) Application number: 03425705.5

(22) Date of filing: 31.10.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicant: Siemens Mobile Communications
S.p.A.
20126 Milano (IT)

(72) Inventors:
• Masseroni, Carlo
  20017 Rho (MI) (IT)

• Trivisonno, Riccardo
  20146 Milano (IT)
• Radice, Ottavio
  20030 Lentate sul Seveso (IT)

(74) Representative: Giustini, Delio
  Siemens Mobile Communications S.p.A,
  Palazzo Gorky
  Via Monfalcone, 1
  20092 Cinisello Balsamo (IT)

(54) **Fast signalling procedure for streaming services quality of service management in wireless networks**

(57) An end to end fast signalling procedure is disclosed in order to improve standard RTP/RTCP transport protocols for the support of streaming services within any kind of wireless and/or mobile networks, in particular for the introduction within GSM-GPRS. The streaming flow is expected to be sent from an Internet Service Provider (ISP) to Mobile Stations (MS). During fast signalling procedure, RTCP feedback messages are sent at a rate higher then the one expected in standard RTCP protocol. Fast signalling messages are made by upgraded Receiver Reports (FRR) intended to make the end to end QoS control mechanism able to react quickly to sudden changes in the available bandwidth that can occur at the radio interface.

## FAST FRR SIGNALLING IN CASE OF TRANSIENT RF FADING

FIG. 8b

EP 1 528 722 A1

**Description**

**FIELD OF THE INVENTION**

The present invention relates to the field of the singlecast and multicast of audio-video streaming services in wireless networks having the characteristics recited in the preamble of the claim 1, and more precisely to a procedure for introducing fast end to end transport layer signalling during streaming services in wireless networks. Possible candidate networks are, for example: mobile radio networks of 2.5G, 3G, B3G, 4G generations, WLANs, and PMP networks with Masters and fixed Slave stations. Common restraint of those networks is that sudden changes in the available bandwidth can occur on the radio interface. Multimedia streaming services are delivered either by Internet Service Providers or non-ISP providers, indifferently, although the first seem to be as the most promising ones in the next future. The technical problem addressed by the invention arise when streaming services are provided to wireless (especially mobile) clients.

For the aim of the description a list of used Abbreviations and cited References are included in APPENDICES 1 and 2, respectively.

**BACKGROUND ART**

Great bandwidth consuming and skill in data transmission are request for delivering multimedia streaming services to remote subscribers, such as: moving pictures and/or hi-fi sound, videoconference, etc. Up till now satellite links or cable TV are preferred means instead of telephone networks. Recently, mainly due to the explosion of Internet everywhere in the world, several efforts are carried out for offering multimedia streaming service also through telephone networks, either of the PSTN or PLMN type. As far as the former ones is concerned (still copper wired for a large part), the way for increasing transmissible bandwidth on wired connections is pursued by ISDN and ADSL (but only optical fibres will be the solution in the near future). In the PLMNs case, the unsuitability of 2nd generation for data transmission are overcome by the introduction of upgrading tools for transmitting packet data on shared resources (e.g. the GPRS); while the bandwidth restrictions are overcome by the evolution towards third generation PLMNs (UMTS) deploying a considerable increasing on channel bandwidth and the further capability of managing asymmetric traffic. In most cases wireless connections to the data network are still performed by means of mobile telephone-set connected to laptop computers through data kits for adapting to the packet service (GPRS). Nevertheless, mobile terminals (MS/UE) are becoming gradually more sophisticated to adequately support the increased bandwidth. For example, the reception of television news directly on the little screen of the wireless handset is a reality nowadays, and continuous improvements are easy predictable. The present trend in Europe is that Network Operators act also as service providers, offering a set of services to the clients of the personal communication. Multicast of audio/video services from a Service Centre connected to a Gateway node towards remote subscribers is the argument of several 3GPP specifications (e.g. TS 25.992, TS 25.346, etc.). Modern PLMNs have gateways nodes also connected to the IP-PDN. In this case different opportunities are open that will be seen after than a glance on Internet is cast.

It is useful to remind that an Internet connection refers to a Client/Server paradigm in which the Server is a 7 host computer addressed by an unique IP address corresponding to the name of an Internet domain (e.g.: name. com). The Server manages service requests forwarded by the Clients towards remote entities responding to respective URLs of the World Wide Web (WWW) according to a TCP/IP protocol. A browsing software, for instance WAP, is used by the various Clients for connecting to the host and gain access to the selected service. The Server has installed all the software to run the relevant protocols, e.g. HTTP, FTP, TCP, IP, RTP/RTCP, etc.

Turning the attention to the opportunities offered by Internet, a first scenario is that a Network Operator also act as ISP through a Service Centre connected to a gateway node of the core network. In this case the Service Centre includes the Host computer having its own URL. An alternative scenario is that ISPs are different entities from the Network Operators and are connected to the IP-PDN in points distant from the Gateway nodes, but also in this case they offer streaming services to the wireless subscribers at their own URLs. A mixed scenario already is possible.

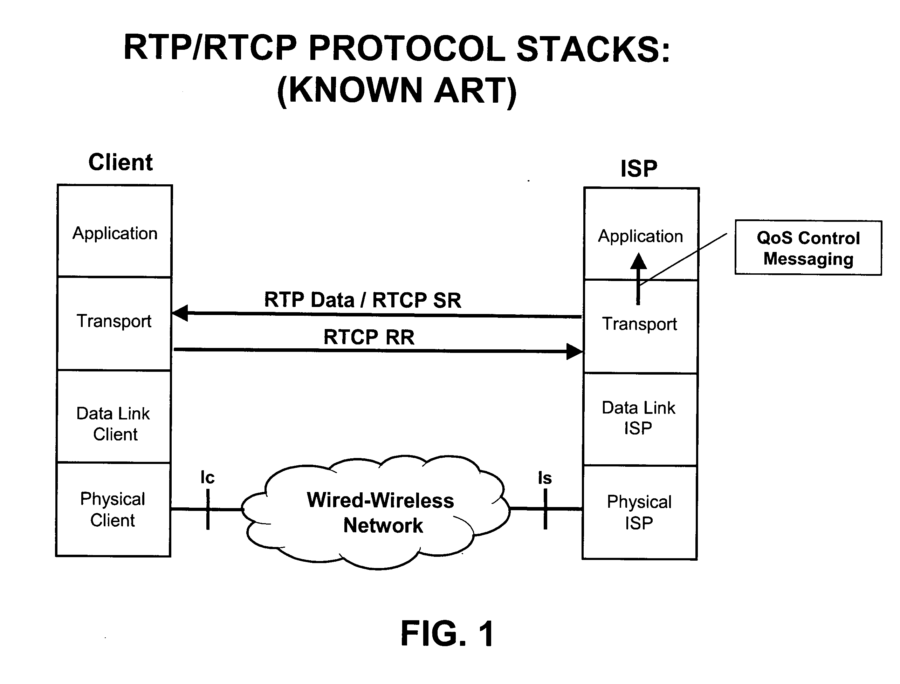

**Fig.1** gives a general representation of the Server/Client paradigm applied to a generic wired-wireless network connected to the IP-PDN one. Two protocol stacks are visible in the simplified example of the figure, a first one at the Client side and the other one at the ISP Server. The client stack includes the following layers listed top-down: Application, Transport, Data Link Client, and Physical Client. The ISP stack includes top-down: Application, Transport, Data Link ISP, and Physical ISP. The two Physical layers at the bottom of the two stacks shown respective connections to the wired-wireless network by means of two interfaces, indicated as Ic and Is. While the Is interface is wired (e.g.: shielded twisted pairs, coaxial cables, optical fibres), the Ic interface includes both radio connections to/from the wireless terminals and wired connections with the wired network. Transport layers include an End-to-End RTP/RTCP protocol according to **Ref. [1],** deputed to the delivering (both in singlecasting and multicasting) streaming and real-time IP services. Both RTP data and RTCP SR signalling (Sender Report) are transmitted from the ISP to the wireless Clients; while a RTCP RR (Receiver Report) signalling is transmitted from the Clients to ISP. End-to-end QoS messages conveyed by the RTCP RR signalling are delivered to the Application layer at the ISP side. The aim of the two protocol stacks is that of play-backing multimedia contents without interruptions at the subscriber stations.

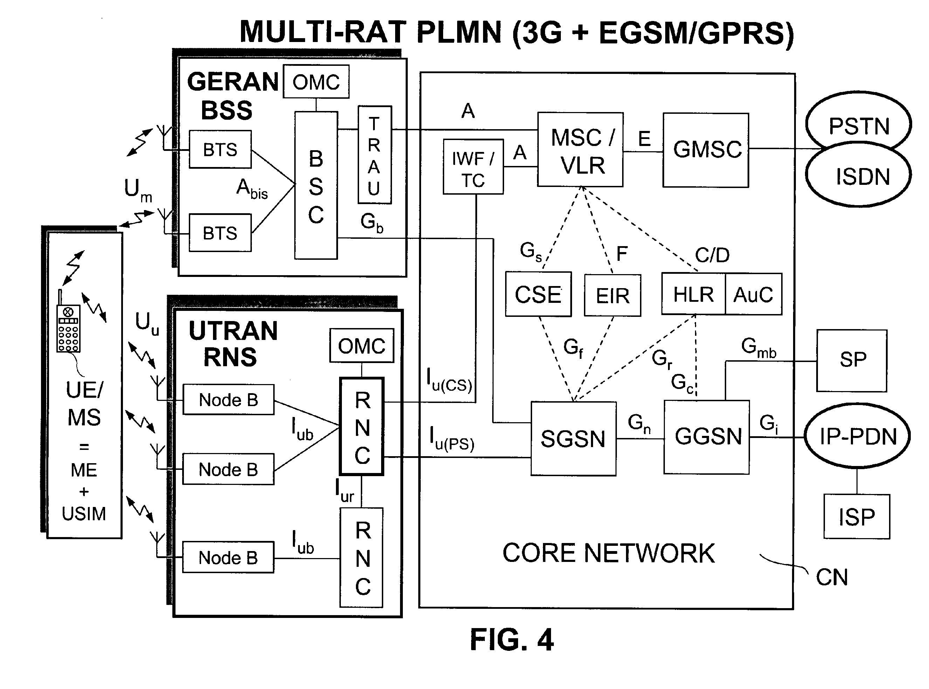

The two stacks of **fig.1** are based on the Open System Interconnection (OSI) Reference Model for CCITT Applications (Rec. X.200). The OSI model plans the overall communication process into (seven) superimposed layers. From the point of view of a particular layer, the adjacent lower layer provides a "transfer service" with specific features. The way in which the lower layer is realised is immaterial to the next higher layer. Correspondingly, the lower layer is not concerned with the meaning of the information coming from the higher layer or the reason for its transfer. The scenario of **fig.1** is referable to any wireless-cum-wired network OSI-compatible but, for the aim of the description, it is referred to the mobile radio system depicted in **fig.4.** Under this assumption, a brief description of the various layers is performed bottom-up.

- Physical layer is a set of rules that specifies the electrical and physical connection between devices. This level specifies the cable connections and electrical rules necessary to transfer data between devices. At the radio interface it specifies the procedure for a correct transfer of the fluxes of bits on timeslots, for example: TDMA/FDMA, encryption, interleaving, channel coding, FEC, and the reverse functions. This layer offers a pool of logical channels towards the upper layers. In case of radio access, physical layer is further responsible for the following procedures at the RF interface: detection of a physical congestion on the RF means; frame synchronization and adaptive frame alignment of the MSs; monitoring of the quality of the RF links through cyclic measurement of indicative parameters; execution of the Power Control commands of the transmitters; and Cell Selection and Reselection.
- Data Link layer denotes how a device gains access to the medium specified in the physical layer; it also defines data formats, to include the framing of data within transmitted messages, error control procedures and other link control activities. From defining data formats to include procedures to correct transmission errors, this layer becomes responsible for the reliable delivery of information. Usually, the Data Link layer is divided into two sublayers: Logical Link Control (LLC) and Media Access Control (MAC).
- Transport layer is responsible for guaranteeing that the transfer of information occur correctly after a route has been established through the network by the network level protocol. Thus, the primary function of this layer is to control the communication session between client and server once a path has been established by the network control layer. Error control, sequence checking, and other end to end data reliability factors are the primary concern of this layer, and they enable the transport layer to provide a reliable end to end data transfer capability.
- Application layer acts as a window through which the application gains access to all of the services provided by underling protocols.

The QoS concept is defined within mobile radio networks too (for GPRS and UMTS network see respectively TS 22.060 and TS 23.060), that could be a part of the wired-wireless network depicted in **fig.1.** An individual QoS profile is associated with each PDP (Packet Data Protocol) context. The QoS profile (within the mobile radio network) is considered to be a single parameter with multiple data transfer attributes. It defines the quality of service expected in terms of the following attributes: precedence class, delay class, reliability class, peak throughput class, and mean throughput class. There are many possible QoS profiles defined by the combinations of the attributes. A PLMN may support only a limited subset of the possible QoS profiles. During the QoS profile negotiation step defined in subclause "Activation Procedures", it shall be possible for the MS to request a value for each of the QoS attributes, also considering the subscribed ones assumed as default. The network shall negotiate each attribute to a level that is in accordance with the available resources. There are four different QoS classes, namely: conversational, streaming, interactive, and background. The main distinguishing factor between these QoS classes is how delay sensitive the traffic is: Conversational class is meant for traffic which is very delay sensitive while Background class is the most delay insensitive traffic class. These classes can be grouped as groups of RT (real time) and NRT (non-real time) services, for example: RT traffic corresponds to the Conversational and Streaming traffic classes, while NRT traffic corresponds to the Interactive and Background traffic classes. Separated uplink and downlink values are considered for the services. The present invention deal with the end to end QoS provisioning for audio video streaming services: such services are mapped into mobile radio streaming class, which is characterised by that the time relations between information entities (packets) within a flow shall be preserved. As the stream normally is time aligned at the receiving end, the highest acceptable delay variation over the transmission media is given by the capability of the time alignment function of the application. A delay compensating buffer is provided at this purpose at the Application Layer. Acceptable delay variation is thus much greater than the delay variation given by the limits of human perception.

When Internet services are cast through mobile radio networks, harmonisation is needed between protocols and mechanism specified by IETF and 3GPP authorities, especially as QoS is concerned. Accordingly, in **Ref. [4]** is quoted: *"The 3GPP PS (Packet Switched) multimedia streaming service is being standardized in **Ref.[5]** based on control and transport IETF protocols, such as RTSP, RTP, and SDP. RTSP is an application level client-server protocol,*

*used to control the delivery* of *real-time streaming data. Both RTP and its related control protocol RTCP convey media data flows over UDP. RTP carries data with real time requirements while RTCP conveys information* of *the participants and monitors the quality* of *the RTP session".*

The RTP/RTCP protocol has been proposed since March 1995 as a draft for IETF standardisation by H. Schulzrinne. The last version of the protocol is described in **Ref. [1].** As defined in this reference, the RTP Data Transport is augmented by a RTCP control protocol which provides the RTP session feedback on data distribution. Two different UDP ports are used for RTP and RTCP.The RTCP serves three main functions:

1. QoS monitoring and congestion control.
2. Identification.
3. Session Size estimation and scaling.

RTCP packets contain direct information for QoS monitoring. The Sender Reports (SR) and Receiver Reports (RR) exchange information on packet loss, delay and jitter. These pieces of information can be used to implement a kind of flow control upon UDP at application layer using adaptive encoding, such as different compression schemes. A network management tool may monitor the network load based on the RTCP packets without receiving the actual data or detect the faulty parts of the network. RTCP packets are sent periodically by each session member in multicast fashion to other participants. A large number of participants may lead to flooding with RTCP packets: so the fraction of control traffic must be limited. The control traffic is usually scaled with the data traffic load so that it makes up about 5% of the total data traffic. Five different RTCP packet formats are defined:

- Sender Report (SR);
- Receiver Report (RR);
- Source Description (SDES);
- Goodbye (BYE);
- Application Defined packet (APP).

Packet formats are also defined in **Ref. [1].**

The RTCP Layer at the ISP is informed about the state of the connection by Receiver Report (RR). **The minimum interval between consecutive RR is defined to be 5 seconds.** The attention is now focused on the RR packet. That report contains the following indications:

1. SSRC of the source for which the RR is sent;
2. The Fraction Lost, i.e. the number of packets lost divided by the number of packets expected since last RR;
3. The highest sequence number received since last RR;
4. An extension of the sequence number to detect possible resets of the sequence numbering;
5. Inter-arrival jitter estimation;
6. Last sender report Timestamp (LSR);
7. Delay since last RR (DLSR).

The feedback provided by RTCP reports can be used to implement a flow control mechanism at ISP application level. The approach belongs to network-initiated QoS control mechanism according to the definition given in **Ref.[2],** namely: *"QoS control bases the application target data rate on network feedback, such as: Low packet losses lead the application to slowly increase its bandwidth, while high packet losses lead to the bandwidth decrease".* Besides, in reference a significant teaching of how implementing an End-to-End Application Control Mechanism is quoted:

*"Our feedback control scheme uses RTP as described in the previous section. The receiving end applications deliver receiver reports* to *the source. These reports include information that enables the calculation of packet losses and packet delay jitter. There are two reasons for packet loss: packets get lost due* to *buffer overflow or due* to *bit errors. The probabili ty* of *bit errors is very low on most networks, therefore we assume that loss is induced by congestion rather than by bit errors, just* as *it is done within TCP. Buffer overflow can happen on a congested link or* at *the network interface of the workstation. To avoid losses* at *the network interface we used the workstations for the multimedia application exclusively. On receiving an RTCP receiver report (RR),* a *video source performs the following steps:*

- *RTCP analysis. The receiver reports of all receivers are analysed and statistics of packet loss, packet delay jitter and roundtrip time are computed.*
- *Network state estimation. The actual network congestion state seen by every receiver is determined as unloaded, loaded or congested. This is used* to *decide whether* to *increase, hold or decrease the bandwidth requirements* of *the sender.*

- *Bandwidth adjustment. The bandwidth of the multimedia application is adjusted according to the decision of the network state analysis. The user can set the range of adjustable bandwidth, i.e., specify the minimum and maximum bandwidth.*

*All steps except the adjustment are independent of the characteristics of the multimedia application. Besides loss, delay jitter, also reported by RTCP, might be used to determine a forthcoming congestion. Due to the related QoS degradation it is desirable to detect congestion before packet loss occurs. In this case the delay will increase due to increased buffering within the network elements. A quick reduction of the bandwidth might completely avoid packet loss. The use of jitter as congestion indicator is only touched in this paper and will be subject to future research .............. " .*

Although the RTP/RTCP protocol was originally developed for Internet applications, it can be easily adapted for multicasting streaming contents through a wireless network even in case multimedia contents come from other sources than ISPs. The simple mechanisms of this protocol don't seem to introduce any particular constraints in this direction.

## TECHNICAL PROBLEM

In wireless environment fast reductions of available bandwidth may suddenly occur, possible causes are the following ones: radio condition worsening (e.g.: slow and/or fast fading), long time radio link outage (e.g.: due to cell reselection in mobile radio systems), radio resource reconfiguration (e.g.: due to cell change), etc.. In such a fast varying environment, the minimum 5 seconds periodic transmission of RTCP packets may be inadequate to provide effective E2E QoS mechanism. It must be also considered that, while radio conditions get worse, some RTCP packets may be lost; this could lead to high packet loss rate or even to the stalling in media playback (for example if cell change takes place while media streaming has already started playing on the MS).

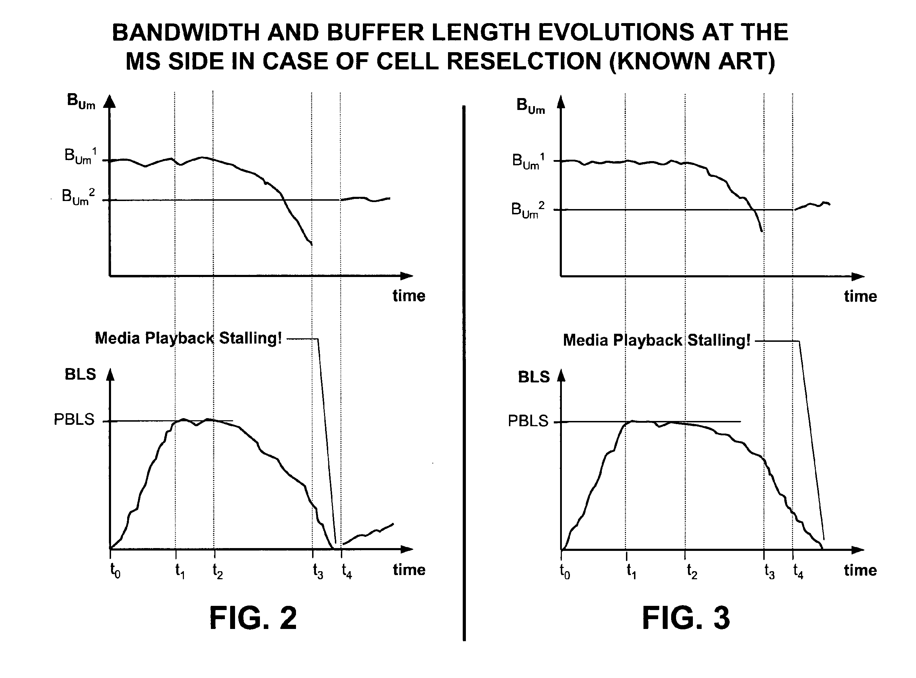

**Figures 2** and **3** show two qualitative examples of stalling situations in case of conventional RTP/RTPC based streaming session, together with proper E2E QoS control mechanism at the ISP, applied to Um interface in case of EGSM-GPRS systems. (see **fig.4**). The two figures are subdivided in two parts, the upper one reports a curve of the available bandwidth $B_{Um}(t)$ on the radio interface, while the bottom part reports a curve of the buffer length **BLS(t)** at the Application Layer. The stall in **fig.2** happens during cell change procedure, while in **fig.3** the stall is due to insufficient bandwidth in the new cell. Before discussing the two figures the following definition are needed. A Preferred Buffer Level **PBL** is defined as the amount of data to be received so that the application at MS side starts play-backing the streaming. Different encodings of the media contents can take place during sessions; for that reason Buffer Level and Preferred Buffer Level are both expressed in units of time. So, the Buffer Level in Seconds **BLS** is equivalently defined as the playback time duration of the buffer content. The Preferred Buffer Level in Seconds **PBLS** is defined in the same way.

With reference to both the **figures 2** and **3**, we assume that a given initial encoding is set (e.g. an MPEG stream with a given average bitrate) and a streaming session is in progress: the AL at the IPS side is sending data to TL at the rate of $B_{AL}^1$ kbit/s (the apex indicates the first phase of the streaming session). We also assume an initial maximum available bandwidth of $B_{Max\_Um}^1$ kbit/s on the $U_m$ interface that leads to a real available bandwidth of $B_{Um}^1(t)$ kbit/s. The session begins in $t_0$. At the beginning of the session it can be assumed that $B_{Um}^1(t)$ is not affected by high variations. At the MS, the application buffer starts filling in at a constant rate and **BLS** increases linearly. In a given instant $t_1$ the parameter **BLS** reaches the **PBLS** threshold, so the application layer at MS starts play-backing the media. If the user is still moving in a well-covered area within the cell (i.e. if a good C/I is experimented), the $B_{Um}^1(t)$ keeps being pretty constant. The application layer buffer is emptied at the same rate it is filled: BLS remains nearly constant in this phase. Now let's assume that, in a give instant $t_2$, radio conditions starts worsening. This leads to a progressive decreasing of $B_{Um}^1(t)$ and, consequently, **BLS** starts decreasing too. In $t_3$ a cell change procedure takes place. During this phase, $B_{Um}^1(t)$ is equal to zero. The application layer goes on playing the media, and BLS goes on decreasing faster.

With reference to **fig.2**, the cell change procedure takes too long and stall in media playback occurs between $t_3$ and $t_4$ in correspondence of **BLS** equal zero. In $t_4$ the outage of the radio interface ends; the mobile is now camped in a new cell and the available bandwidth is now defined as $B_{Um}^2(t)$ (the apex now indicates the second phase of the streaming session, subsequent to the cell change). Starting from $t_4$ the Application buffer begin to be filled and **BLS** increases again.

With reference to **fig.3**, the stall in the media playback has not occurred between $t_3$ and $t_4$. When the outage of the radio interface ends, the available bandwidth $B_{Um}^2(t)$ is not enough to avoid the application buffer be emptied; in this case stall is unavoidable. Note that the End-to-End reaction by ISP may happen after the reception of some RR messages, this could take tens of seconds and it would be based only on RTP packet loss and jitter computation, as a consequence the ISP reaction could be easily too slow and delayed to counteract the insufficient bandwidth. On the contrary, if in $t_4$ the available bandwidth $B_{Um}^2 (t)$ is properly dimensioned the session goes on with no problems.

## OBJECT OF THE INVENTION

The main object of the present invention is a proposal of an end to end signalling procedure intended to improve standard RTCP protocol for the support of streaming services in wireless networks. It may improve end to end QoS management procedures; for example, it may help avoiding media playback stalling when critic conditions on the radio interface are probably going to take place. Basically, the proposal should allow the Service Provider to react fast to the decreasing of the available bandwidth, undertaking appropriate actions, like switching to a less bandwidth consuming encoding although this of course reduces the quality of the audio/video streaming but, to a certain extent, this is preferable than stalling.

## SUMMARY AND ADVANTAGES OF THE INVENTION

To achieve said objects the subject of the present invention is a signalling procedure, as disclosed in the claims.
Before illustrating the new signalling, a brief illustration of the background context, according to the preamble of claim 1, is needed. The nearest background is constituted by a wireless network which connects a Service Provider to wireless MS clients for multicasting audio/video streaming services. A Transport Layer between Data Link Layer and Application Layer is comprised in both the protocol stacks at the Service Provider and MS sides. An RTP/RTCP protocol makes the Transport Layer able to support streaming services. During an on going streaming session data messages are carried by RTP and control messages carried by RTCP. The RTCP messages are managed according to a network-driven QoS scheme, such has the one suggested in **Ref.[2]**. It is further known that Data Link Layer continuously monitors the quality of the radio link in order to reach a minimum quality target under supervision of Mobility Management functionality. The quality of the link depends on some parameters that may differ from a system to another. As examples of these parameters we can mention: BER, FER, BLER at Data Link layer; the received signal power level; the interference power level, the C/I ratio etc. For the sake of simplicity these parameter are indicated as $P_1, P_2, ..., P_n$.
Now, according to the present invention, when the quality of the radio link is worsening and drops under a given quality level, Data Link Layer sends a triggering signal to the Transport Layer and, consequently, Transport Layer enters in a fast signalling phase. For this reason, the procedure can be defined as "Data Link Triggered". The triggering event happens when a first threshold on the quality level is reached. We define this condition as:

$$f(P_1,P_2,...,P_n) = 0 \tag{1}$$

During the fast signalling phase RTCP RRs are sent every time a triggering signal comes from the Data Link layer. For this reason the procedure can be further defined as "Data Link Driven". The rate in RRs sending is increased and the RRs messages sent during this phase are called Fast Receive Report (FRR). Each FRR carries all fields included in RR plus the following additional information:

- Information about the real available bandwidth on the radio interface, provided by Data Link layer;

- Information about the amount of media file cached at client Application Layer.

Transport Layer operates in fast signalling mode until the quality of the link goes over another given quality level. The triggering-back event happens when a second threshold on the quality level, preferably greater than the first one, in order to introduce hysteresis, is reached. We define this condition as:

$$g(P_1,P_2,..., P_n) = 0 \tag{2}$$

When condition (2) is verified, Data Link layer sends a triggering message to the Transport layer that force it to leave the fast signalling phase. Transport Layer switches its operating mode from fast to normal and RRs are sent accordingly. At the Service Provider side, during fast signalling phase, with the information carried by FRRs, enhanced QoS control mechanisms can be implemented (some tools are given later in the description).
Considering an embodiment of the invention specific for GSM/EDGE, the minimum interval between two **FRR** reporting messages is 480 ms, equal to the measurement reporting period at the MS side (see GSM 45.008 v6.0.0, paragraph 8.4.1). By comparison, the minimum interval between two **RR** messages indicated in **Ref.[1]** is **5 seconds**. The great difference between two intervals gives the Service Provider a more precise knowledge of the bandwidth on the radio interface evolution, paying only an increasing of the required uplink bandwidth. This because the FRR sending spans the limited duration necessary to either favourable overcome critic conditions at the RF interface or definitely disconnect. In most cases cell reselection will be completed without running into stalling of the media playback.

Information carried by **FRR** messages includes: **a)** the available bandwidth on the radio interface; **b)** Transport Layer Packet loss ratio and packet delay jitter; and **c)** the amount of media file cached at mobile station side. It can be appreciated that information at points **a)** and **c)** are not included in the current standardization.

In conclusion, the proposed invention is focused on the following aspects:

- Exchanging of information between Data Link Layer and Transport Layer are foreseen in order to make Transport Layer aware about the behaviour of radio interface.
- New E2E Transport Layer messaging is foreseen: new RR has been designed, carrying information derived from different layers constraints (from Data Link, Transport, and Application layers).
- New E2E QoS handling approach is presented based jointly on radio interface and Application Layer constraints.

According to the present invention, FRR reports convey greater and faster information content with respect to the standard RR reports. As described in detail in the following, the contents at the new points **a)** and **c)** are combined with each other to calculate two prevision parameters ($T_E$, $T'_E$). $T_E$ and $T'_E$ are used to take decisions about the switching of encoding at the Service Provider side. Thanks to these parameters, the Application Layer at the Service Provider is informed that application buffer at the client side is getting empty and/or the available bandwidth at the RF interface is rapidly decreasing. Service Provider is also informed about the end of those unfavourable conditions.

The inter-protocol signalling of the present invention has been originally designed to improve the skill of (E) GPRS to support streaming services from ISPs; the mechanism can be anyway extended as an advanced end-to-end Quality of Service control procedure within any kind of wireless systems. The basic assumptions of the native proposal are:

1. The ISP is directly connected to the core network and no IP-PDN constraints are considered.
2. Harsher bandwidth constraints are on the radio interface, the interface of the wired network are considered as "non critic" interfaces.

This proposal is compliant with E2E frameworks for multimedia streaming over wireless system recently investigated in Ref.[3] and [4]. Invention perfomance improvements are expected also when the first assumption is abandoned and the ISP connected to the IP-PDN some hops distant to the core network, so that IP constraints are considered and the second assumption lost its importance consequently. The effectiveness of the proposed invention, studied with this more severe conditions, appears still good and stall on media play-backing are prevented.

To summarize, the teaching of the invention is focused on a new RTCP signalling which is completely determined at the MS side, but to be used at the Service Provider side for managing the end to end QoS. How the Service Provider handles the received signalling is a task independent from the criteria used for generating it. Let's make an example referring to a streaming session ongoing in GPRS system (see fig.4). Many proposals and QoS frameworks can be found in literature. If radio conditions get worse, we could expect a kind of chain of signalling starting from BSC, passing through SGSN, GGSN and ending at ISP/CP. In addition, RTP/RTCP based QoS mechanisms can be implemented in the system supporting the ongoing session. The proposal of the invention can be seen as an alternative approach intend to integrate radio network information and MS Application Layer information **within** the RTP/RTCP based QoS mechanisms. Three main benefits can be achieved paying the price of a slight increasing in the required bandwidth on uplink, namely:

- Faster reaction to network behaviours.
- QoS flow control mechanisms can be refined as the multilayer information is available.
- Predictive QoS control mechanisms can be implemented.

In terms of actual improvements expected it can be mentioned:

- Avoid stalling in streaming playback when cell change occur.
- More efficient bandwidth utilisation, as the required bandwidth can be E2E reduced depending on radio conditions.
- Reduce enqueuing of packets in both SGSN and BSC buffers, as the sending of application data from ISP/CP can be related to actual available bandwidth.

**BRIEF DESCRIPTION OF THE DRAWINGS**

The features of the present invention that are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:

- **fig.1,** already described, shows a schematic Server/Client representation including relevant communication protocol stacks and interchanged data/signalling messages between stacks, as in the known art referred to a wireless network used by an ISP/CP to transmit audio/video streaming services;
- **figures 2** and **3**, already described, show some curves of possible temporal evolution of relevant critical parameters measured at the MS side of the network of the preceding figure;
- **fig.4** shows a functional block representation of a wireless network wherein the present invention is implementable;
- **figures 5** and **6** differ from **fig.1** by the fact that additional inter-protocol signalling messages and end to end FRRs according to the present invention are shown with increasing details;
- **fig.7** shows the format of FRR packet for the delivering of RTCP FRR message of **fig.6;**
- **fig. 8a** shows the message sequence chart of the control signalling procedure of the present invention in case a cell reselction takes place in the network of **fig.4;**
- **fig. 8b** shows the message sequence chart of the control signalling procedure of the present invention in case of transient worsening on the RF interface of the network of **fig.4;**
- **fig.9a** shows some curves of possible temporal evolution of relevant critical parameters measured at the MS side of the network of **fig.4** which implements the control signalling procedure of **fig. 8a**; and
- **fig.9b** shows some curves of possible temporal evolution of relevant critical parameters measured at the MS side of the network of **fig.4** which implements the control signalling procedure of **fig. 8b.**

**DETAILED DESCRIPTION OF AN EMBODIMENT OF THE INVENTION**

Fig.4 shows a 3GPP multi-RAT PLMN whose operation has been modified to embody the invention that will be described. The PLMN comprises a Core Network (CN) connected to two different Access Network, namely, the well consolidated GERAN and the recently introduce UTRAN. The latter improves data service thanks to its greater throughputs and the capability to route the asymmetrical IP data traffic. Both the access networks share the same GPRS service, so as the pre-existing GSM Core Network. Both UTRAN and GERAN are connected, on air, to a plurality of mobile terminals of UE/MS types, each including a Mobile Equipment ME with a respective USIM card. The present invention applies to MS/UE terminals of single but preferably multistandard type. The UTRAN includes a plurality of Node B blocks each connected to a respective Radio Network Controller RNC by means of an Iub interface. Node B includes a Base Transceiver Station BTS connected to the UEs through a standard Uu radio interface (differences are given by the present invention). The upper RNC is a Serving S-RNC connected to the Core Network CN by means of a first Iu(CS) interface for Circuits Switched and a second Iu(PS) interface for Packet Switched of the GPRS. It is also connected to an Operation and Maintenance Centre (OMC). The RNC placed below can be a Drift D-RNC and is connected to the upper S-RNC by means of an Iur interface. UTRAN constitutes a Radio Network Subsystem (RNS) disclosed in TS 23.110.

The GERAN includes a plurality of BTSs connected to a Base Station Controller BSC by means of an Abis Interface and to the MSs through a standard Um radio interface (differences are given by the present invention). The BSC is interfaced to the Core Network CN by means of a Gb interface (packet switched) and is further connected to a Transcoder and Rate Adaptor Unit TRAU also connected to the Core Network CN through an A interface. It is also connected to an Operation and Maintenance Centre (OMC).

The CN network of fig.4 includes the following Network Elements: MSC/VLR, GMSC, IWF/TC, CSE, EIR, HLR, AuC, Serving SGSN, and GGSN. The following interfaces are visible inside the CN block: A, E, Gs, F, C, D, Gf, Gr, Gc, Gn, Gi, and Gmb. The IWF block translates the Iu(CS) interface into the A interface towards MSC/VLR block. The TC element performs the transcoding function for speech compression/expansion concerning UTRAN (differently from GSM where this function is performed outside the CN network) also connected to the MSC block through the A interface. The GMSC is connected to the MSC/VLR through the E interface and to a Public Switched Telephone Network PSTN and an Integrated Services Digital Network ISDN. Blocks CSE, EIR, HLR, AUC are connected to the MS /VLR through, in order: the Gs, F, C, and D interfaces, and to the SGSN node through the Gf and Gr interfaces. The SGSN block is interfaced at one side to the GGSN node by means of the Gn interface, and at the other side both to the Serving RNC by means of the Iu(PS) interface and to the BSC through the Gb interface. The GGSN is further connected to an IP-PDN network through the Gi interface, and to Service Providers SPs through the Gmb interface. The Core Network CN consists of an enhanced GSM Phase 2+, as described in TS 23.101, with a Circuit Switched CS part and a packet Switched part (GPRS). Another important Phase 2+ is the CAMEL and its Application Part (CAP) used between the MSC and CSE for Intelligent Network, as described in TS 29.078.

In operation, node MSC, so as SGSN, keep records of the individual locations of the mobiles and performs the safety and access control functions. More BSS and RNS blocks are connected to the CN Network, which is able to perform either intrasystem or intersystem handovers/cell reselections. An international Service Area subdivided into National Service Areas covered by networks similar to the one of fig.4 allows the routing of either telephone calls or packet data practically everywhere in the world. Many protocols are deputed to govern the exchange of information at the various interfaces of the multi-RAT network. The general protocol architecture of the signalling used in the network includes an Access Stratum with a superimposed Non-Access Stratum (NAS). The Access Stratum includes Interface protocols and Radio protocols for exchanging User data and control information between the CN and the UE. These protocols contain mechanisms for transferring NAS messages transparently, i.e. the so-called Direct Transfer DT procedures. The NAS stratum includes higher level protocols to handle control aspects, such as: Connection Management CM, Mobility Management MM, GPRS Mobility Management GMM, Session Management SM, Short Message Service SMS, etc. For the aim of the description, the only protocol layers interested by the present invention are the ones mentioned in the illustration of **fig.1.**

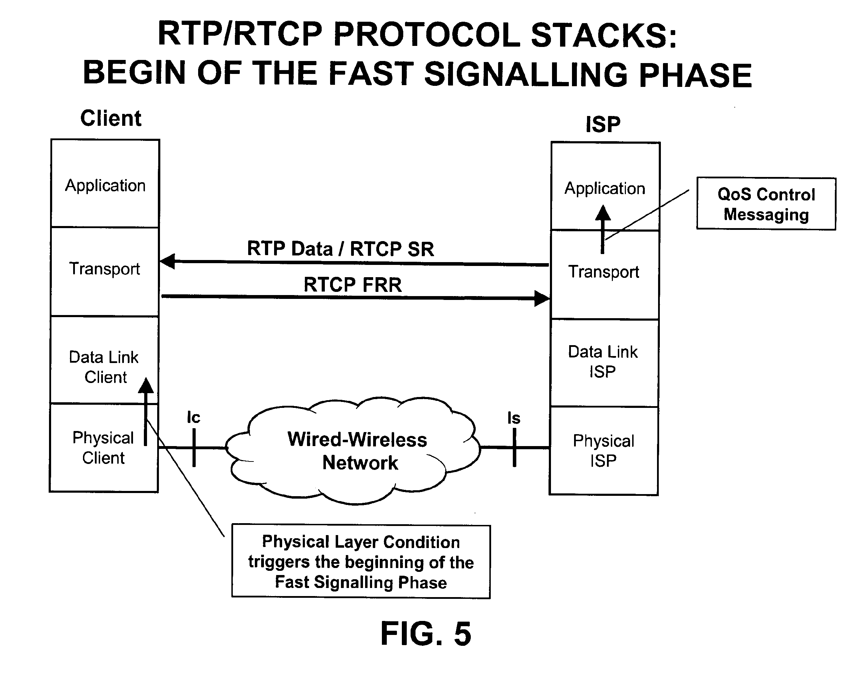

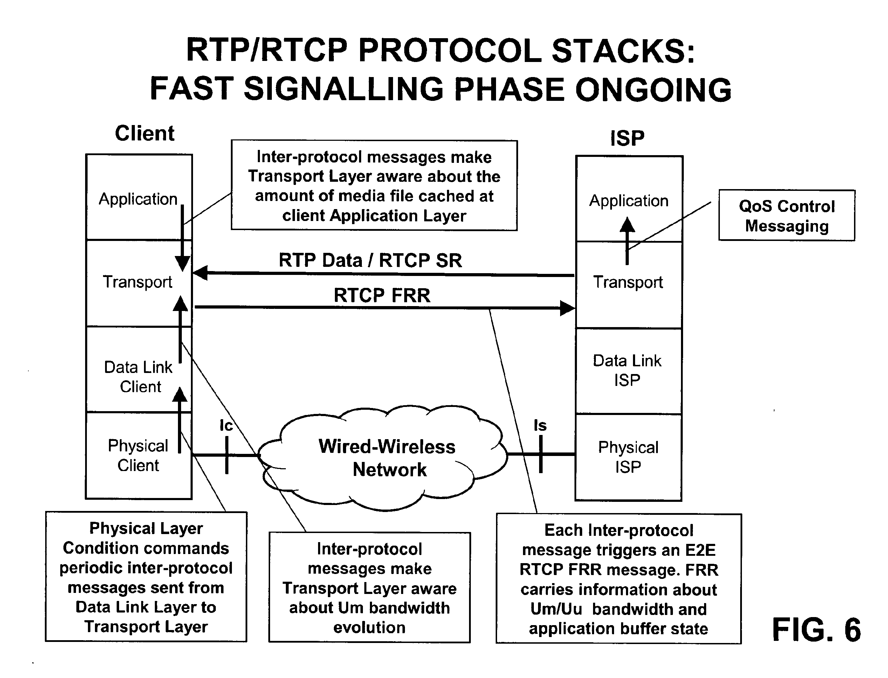

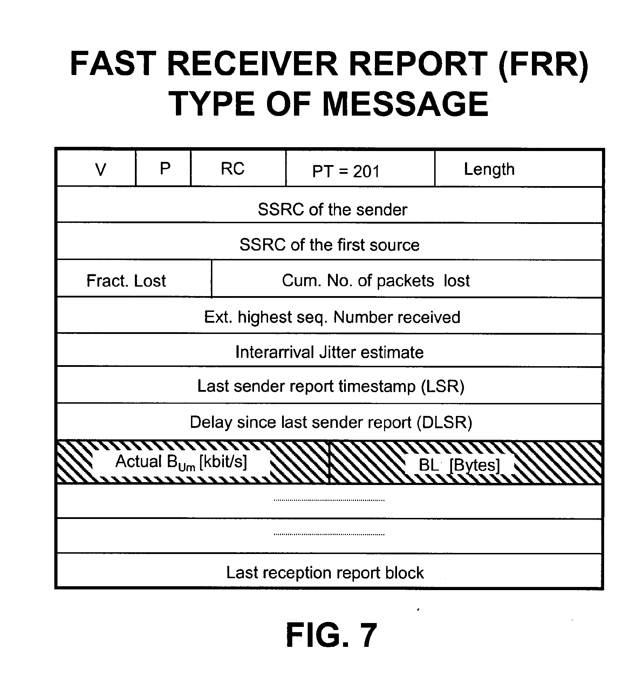

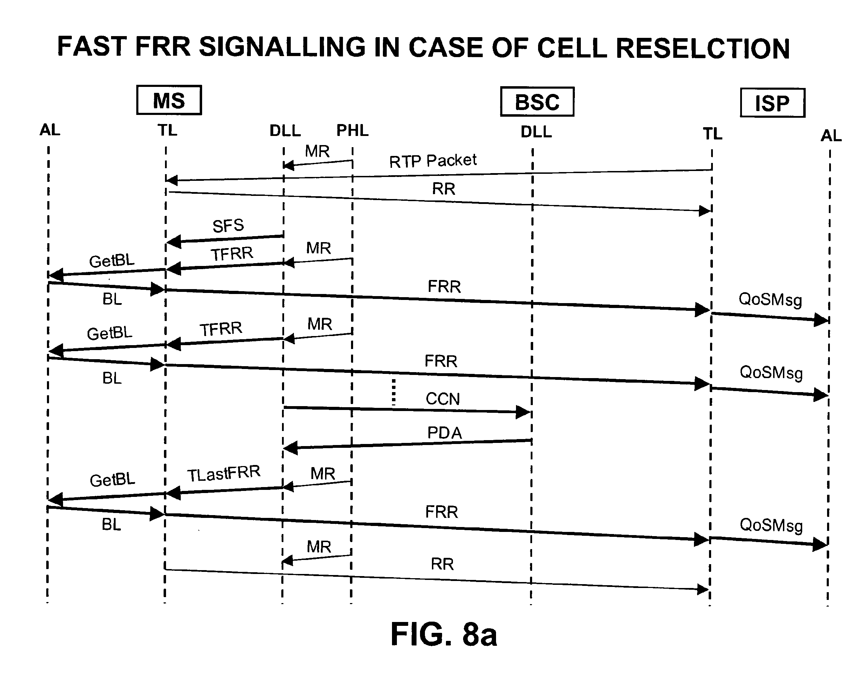

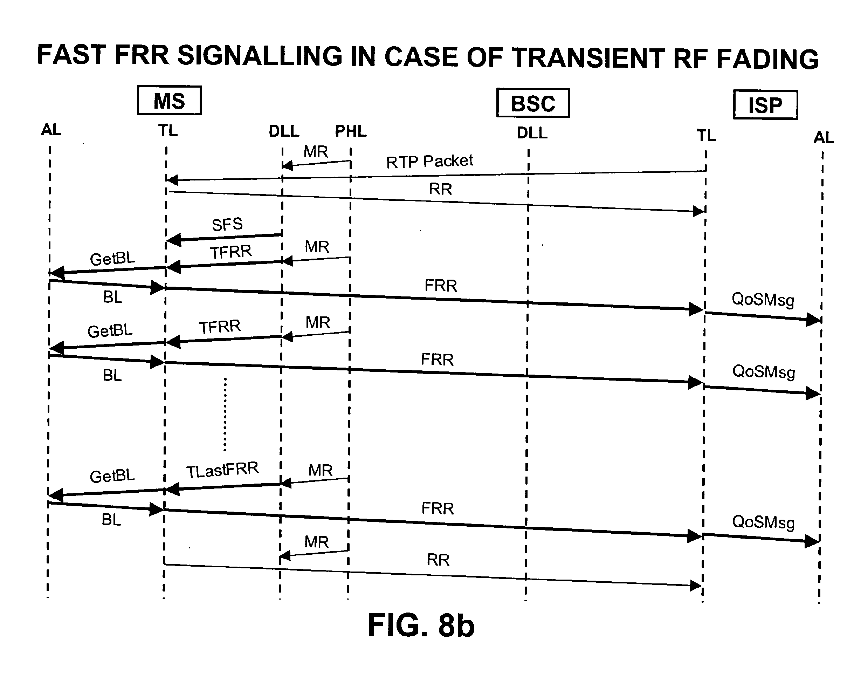

The embodiment of the invention mainly consists in the addition of: a) new inter-protocol signalling messages (at MS side) to the representation of **fig.1,** as illustrated in **figures 5** and **6** and b) new end to end RTCP messages (defined FRRs) that differ from standard RRs for the information they carry and the rate at which they are sent. The actions undertaken at Client side (MS/UE) for generating the various type of signalling messages exchanged between adjacent Layers, are well detailed in the respective callouts visible in those self-explanatory figures. The structure of the **FFR** message is depicted in **fig.7.** In **fig.8a** a message sequence chart of the signalling procedure is represented for the case a cell reselection takes place during a streaming session through the network of **fig.4. Fig.8b** differs from the preceding one by the fact that cell reselection does not take place: a temporary worsening at the RF interface takes place only.

Without limitation, the successive figures are referred to the GPRS system but the same description is valid for UMTS and more in general for all the wireless networks operating in accordance with a protocol structure as the depicted one.

With reference to **fig.7,** the only difference between the **FRR** message and the standard structure of the RR message is given by the presence of two additional fields named "Actual $B_{Um}$" and "BL", respectively. The first one includes the value in kbit/s of the real available bandwidth at the Um interface; the second one is the Buffer Level defined as the amount of data bytes stored in a delay-compensating buffer at the Application Layer.

Considering the **figures 8a** and **8b**, some parallel time lines (dashed) departing from corresponding network elements on the top are drawn for indicating the boundaries of the protocol Layers visible in **figures 5** and **6** both at the Client and Server sides. Thick sloped arrows between couples of parallel lines represent messages required to implement the fast signalling procedure; such messages are exchanged between entities and protocol agents; all the signalling subject of the present invention is included; thin arrows represent standard signalling according to **Ref. [1].** The name of the messages are indicated on the corresponding arrows, so as in **APPENDIX 1.** The message sequence chart of **figures 8a** and **8b** is ideally subdivided in three sequential zones of operation:

- a first zone starts from the streaming Session Initiation (not shown) and prosecutes until a condition for transmitting an SFS message is verified;
- a second zone starts from the transmission of the SFS message and terminates when a last FRR message is transmitted upon the reception of a message TLastFRR;
- a third zone starts after last FRR message is transmitted and prosecutes up to the end (not shown) of the session.

The case of **fig.8a** is described at first. The highlighted time window starts a little time before the triggering event for Cell Reselection is verified. In this circumstance the measured QoS is unavoidably continuously decreasing until a new cell is selected.

**FIRST ZONE OF THE MESSAGE SEQUENCE CHART**

With reference to **fig.8a**, the initiation of the Streaming Session is a known procedure that can be performed as indicated in **Ref. [3].** After initiation, a given encoding is set and a Downlink Streaming Session is ongoing for a given subscriber in a given cell. RTP/RTCP and UDP make the Transport Layer (TL). An E2E RTP/RTCP connection corresponding to the first two arrows has been established and, at ISP side, the Application Layer (AL) is sending data to the Transport Layer at the average rate of $B_{AL}^1$ kbit/s. The available bandwidth on the $U_m$ interface is related to the varying radio channel conditions. A maximum RLC/MAC available bandwidth on $U_m$ interface of $B_{Max\_Um}^1$ kbit/s is assumed. The real available bandwidth $B_{Um}$ on $U_m$ interface depends on both the coding scheme used and BLER. As coding scheme performance vs. C/I and Link Adaptation Algorithm are given, a factor $\alpha$**(C/I)** can be introduces so that:

$$B_{Um}{}^1 \ B_{Max\_Um}{}^1 \cdot \alpha \ (C/I). \tag{3}$$

As C/I varies during the session, $B_{Um}{}^1$ varies too: due to this time-variation, the available bandwidth may be also indicated as $\mathbf{B_{Um}{}^1(t)}$ . If a protocol overhead value $\Delta_{\mathbf{overHead}}$ (<1) between DLL and AL layers is assumed, the application buffer at MS side is being filled at the rate:

$$Buf_{IN}{}^1 = B_{Um}{}^1 \cdot \Delta_{OverHead} \tag{4}$$

When **PBL** is reached, the application starts emptying the buffer at the rate:

$$Buf_{OUT}{}^1 = B_{AL}{}^1 \tag{5}$$

Note that Base Station Controller (BSC) LL-PDU buffer is filled in at the rate:

$$BUfBSC_{IN}{}^1 = \frac{B_{AL}{}^1}{\Delta_{OverHead}} \tag{6}$$

and it is emptied at the rate:

$$BUfBSC_{OUT}{}^1 = B_{Um}{}^1 \tag{7}$$

During this initial phase of the streaming session, RTCP signalling is performed in the ordinary manner, e.g. the RR messages are sent every **5 seconds** and E2E QoS managing is done as described in **Ref.[2]** or **Ref.[3]** (these are just examples of "Ordinary" QoS Control). The MS, during its ordinary operation, continuously monitors if some conditions for cell reselection may happen: **Ref. [5]** and **Ref. [6]** are 3GPP standards valid for (E)GPRS Cell Reselection and Measurements procedures, respectively. In particular, Physical Layer issues each **480 ms** a Measurement Result (MR Report) to the Data Link Layer. No matter which is the cell reselection criteria used, it can be assumed a cell reselection procedure is started when a given condition on the average received RF signal level on BCCH carriers on serving and surrounding cells is verified. As known, the MS has capability of measuring the received RF signal level on the BCCH carrier of the serving and surrounding cells and calculating the average received level $RLA\_P_i$ for each carrier. Let's define the condition that makes cell change start as:

$$f(RLA\_P_1, RLA\_P_2, ..., RLA\text{-}P_n) = 0 \tag{8}$$

A new condition that in predictive mode triggers the beginning of a "fast signalling phase" before the cell change start is defined as:

$$f'(RLA\_P_1, RLA\_P_2, ..., RLA\_P_n, UCS, BLER, ATSs, Mufact) = 0 \tag{9}$$

Condition (9) is related to different variables, namely: the Received Level Average ($RLA\_P_l$) for each carrier; the UCS and BLER at RLC/MAC layer; the ATS to the MS; and the Multiplexing Factor (MuFact) indicating the number of MSs which share the timeslot/s allocated to the considered MS. The criterion to set condition (9) is to pursue a combination of measured parameter values by which this condition indicates that the MS is running into one, or more, the following situations:

- $B_{um}$ is rapidly decreasing;
- Cell Change is probably going to happen;
- A some seconds long outage on the Um interface will probably occur.

Because of condition (9) only depend on parameters measured at Physical Layer PHL, it is reasonably to test this condition every time a measurement reporting (see **Ref. [6])** is performed. As a consequence, condition (9) is tested concurrently with the sending of the ordinary signalling, to say, the Receiver Reports RR. When condition (9) is verified at MS side the protocol enters the successive operating zone to start a fast signalling phase.

**SECOND ZONE OF THE MESSAGE SEQUENCE CHART**

The main goal of this zone is to allow the media content to be fully play backed avoiding the emptying of the application buffer in the middle of the streaming. To reach this purpose the following steps are sequentially executed at the MS side:

1. Once condition (9) is verified, an inter-protocol message **SFS** is sent from the RLC/MAC protocol at Data Link Layer to the RTP/RTCP protocol at Transport Layer, in order to notify the beginning of a new and temporary RTCP fast signalling phase. When entering the fast signalling phase RTCP changes its policy for RR sending. The duration of the fast signalling phase depends on the delay in coming true of condition (8). Another condition in grade of influencing the duration of the fast signalling phase will be introduced in the description of the successive **fig.8b.**

2. Every time a measurement reporting is performed, until condition (8) is not verified an inter-protocol **TFRR** (Trigger Fast Receiver Report) message is sent from the RLC/MAC protocol at Data Link Layer to the RTP/RTCP protocol at Transport Layer. Note that TFRR messages are triggered by Physical Layer Measurements Reporting which carries information about $B_{Um}$ ultimately determined by:

- the number of Time Slots allocated;
- the scheduling policy on those TSs;
- the coding scheme used;
- the BLER.

3. Every time a TFRR message is received at Transport Layer, an inter-protocol **GetBL** message is sent from the Transport Layer to the Application Layer to have returned information about the state of the application buffer.

4. Every time a GetBL message is received at Application Layer, an inter-protocol message **BL** is sent back to the Transport Layer. The **BL** message includes information about the state of application buffer, e.g. Buffer Length carrying the value of the BL time-varying parameter.

5. Every time a BL message is received at the Transport Layer, a new RR message called **FRR** is sent end-to-end to the peer layer at the Service Provider. The FRR message basically includes:

- all information included in ordinary RR messages;
- information about $B_{um}$ extracted from the TFRR message;
- information about the state of application buffer extracted from the BL message.

6. Steps **2** to **5** are repeated cyclically and condition (8) is tested concurrently with the sending of the faster signalling, to say, the FRR Reports. When condition (8) is verified in **step 2** the remaining **steps 3, 4, and 5** are completed; then Cell Reselection procedure takes place. Various types of Cell reselection procedures are described in **Ref. [5]** , all implementable in this step. In CCN mode, Data Link Layer at the MS sends a CCN (Cell Change Notification) message to the peer Data Link Layer at the BSC. The CCN message notifies the network when the cell reselection is determined and delays the cell re-selection to let the network respond with a PDA message including neighbour cell system information. Then the MS disconnect the old cell and enters a selected one. While cell change takes place, no TFRR messages are sent and steps 2 to 5 are suspended consequently.

7. When MS is camped on the new cell there is not reason to continue the fast signalling phase (assuming, of course, that condition (9) is not verified in the new cell). A last inter-protocol message **TLastFRR** (Trigger Last Fast Receiver Report) is sent from the RLC/MAC protocol at Data Link Layer to RTP/RTCP protocol at Transport Layer. The message carries information about $B_{Um}$ in the new cell and also indicates to the Transport Layer the end of the fast signalling phase.

8. Steps **3, 4,** and **5** are repeated and the **last FRR** message notifies to peer Transport Layer at ISP side the end of the fast signalling phase.

**THIRD ZONE OF THE MESSAGE SEQUENCE CHART**

9. At the end of the fast signalling phase, Transport Layer switches back RTCP to its ordinary mode of operation. Might happen that the various steps are repeated also in the new cell.

Now the case of **fig.8b** is described. The time window highlighted in the figure starts some time before the triggering of the fast signalling phase and last till the improvement of radio conditions makes RTCP leave the fast signalling phase.

With reference to fig.8b, the relevant message sequence chart almost completely coincides with the one of the preceding figure, except for the absence of both messages CCN and PDA related to the cell reselction procedure. In operation, the overall signalling procedure completes the **first zone** of the message sequence chart and, if condition (9) is verified, enters the **second zone** where Transport Layer operates in fast signalling mode. **Steps 2** to **5**, are cyclically repeated until the link quality returns over another given quality level, greater than the one which drove condition (9) being true. With that, the some grade of hysteresis is introduced. We define a new condition for detecting this event as:

$$g(RLA\_P_1, RLA\_P_2 ,...,RLA\_P_n, UCS, BLER, ATSs, MuFact) = 0 \qquad (10)$$

Condition (10) is tested at Physical Layer PHL in **step 2** in the only case the preceding condition (9) is not more verified due to a QoS improvement, such as an increased available bandwidth for the service. Condition (10) is tested concurrently with the sending of the faster FRR signalling. When condition (10) is verified in **step 2,** the inter-protocol message TFRR is replaced with **TLastFRR** and the remaining **steps 3, 4, and 5** are completed. Also in this case **last FRR** message notifies to peer Transport Layer at ISP the end of the fast signalling phase and Transport Layer switches back RTCP to its ordinary mode of operation. Because of the event triggering conditions (8), (9), and (10) are tested every time a measurement reporting is performed, might happen that the depicted signalling is repeated more than once during the active session.

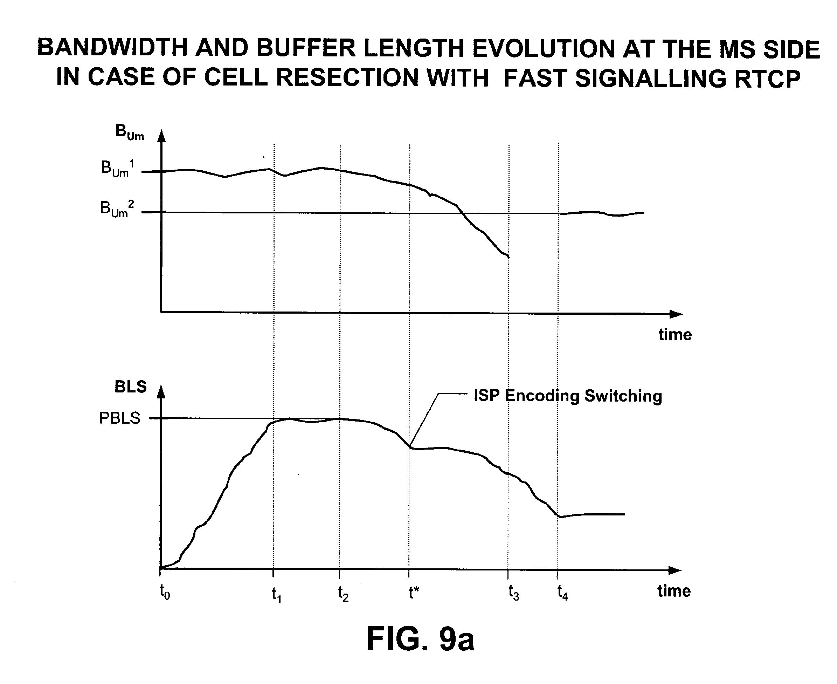

**Fig.9a** schematically represents the evolution of the available bandwidth and buffer length at MS side: before, during, and after a cell change happens with the support of the fast signalling procedure of the invention, together with a proper End-To-End QoS management policy. With reference to **fig.9a,** before instant **t\*** the pictured **B$_{um}$(t)** and **BLS** behave exactly like in **fig.3**. The Fast Signalling phase begins little before the instant **t\*.** An immediate encoding switching at ISP is assumed at the instant **t\*.** The lower quality encoding used after switching allows the application buffer at MS to be filled at the same rate (in terms of SecondOfMediaFile/s) it was before **t$_2$.** Of course, as **B$_{um}$** keeps decreasing, the application buffer filling rate at MS decreases too. Anyway, if a proper encoding is chosen on time at the instant **t\*,** the application buffer at MS doesn't fall completely emptied during the interval **t$_3$-t$_4$** and stall is avoided during the outage of the RF interface. At time **t$_4$** the MS is camped on the new cell and the available bandwidth **B$_{Um}^2$ (t)** is properly dimensioned; in this case the application buffer is filled at the same rate it is emptied and the session goes on with no problems.

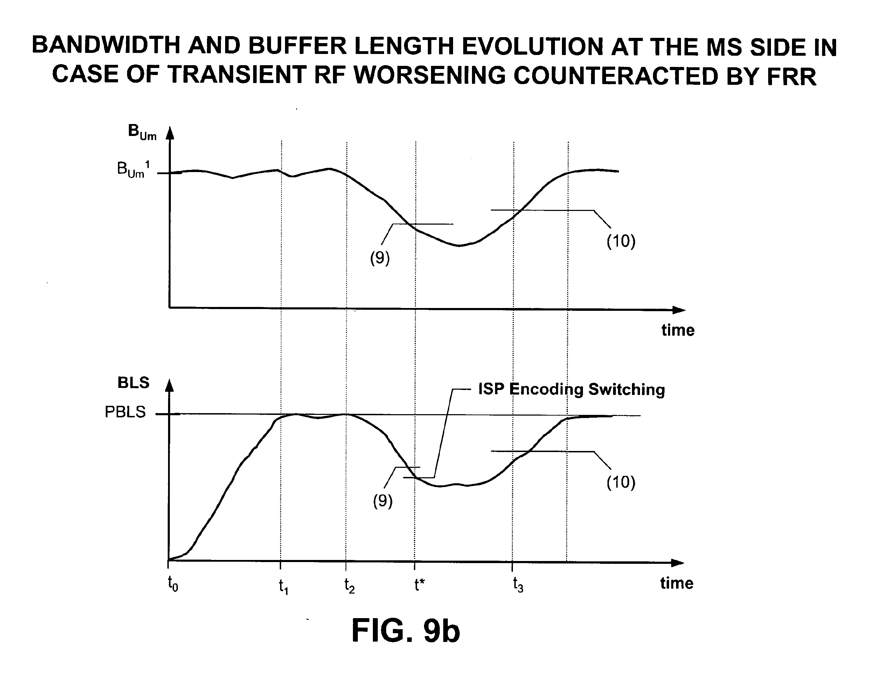

**Fig.9b** schematically represents the evolution of the available bandwidth and buffer length at MS side in case the side effect of a transient RF worsening at the Um interface is faced by the fast signalling procedure of the invention. With reference to **fig.9b,** until instant **t\*** included the pictured **B$_{Um}$(t)** and **BLS** behave exactly like in **fig.9a.** At instant **t\*** fast signalling phase (FRR) has already started. Thanks to the predictive signalling, a proper lower encoding is chosen on time at the instant **t\*** so that the **BLS** is kept constant. After **t\*** the available bandwidth **B$_{Um}^1$ (t)** starts increasing again. At the instant **t$_3$** condition (10) is verified and normal RR is reinstated. After **t$_3$** both **B$_{Um}^1$ (t)** and **BLS** are kept constant at the value they have at time **t$_2$.**

Basically, both the **figures 9a** and **9b** show the proposed signalling procedure at work to face different critical situations, all of them having as an immediate result the reduction of available bandwidth. As a consequence, the ISP can react fast to the decreasing available bandwidth. Appropriate actions like switching to a less bandwidth consuming encoding can be undertaken early. This of course reduces the quality of the audio/video streaming but playback stalling of the media can be avoided. As known, the most popular standards encoder in audio and/or video, such as: MPEG-video, MPEG-audio, Dolby Digital AC-3, etc., allow coding with different selectable bitrates. The skill of the invention in alerting the ISP appears clearly from the curves.

**ENHANCED END-TO-END QoS CONTROL ALGORITHMS**

This section gives an example of a simple QoS control algorithm that can be implemented based on the fast signalling procedure. We assume the fast signalling procedure is made of 1, 2, ..., N FRR messages. The i-th FRR report is received at the ISP at the time t(i) and it contains the following information:

- **$B_{Um}$ (i) [kbit/s];** $B_{Um}$ computed when the i-th FRR is sent;
- **BL(i) [kbyte];** BL measured when the i-th FRR is sent.

When the i-th FRR report is received at the ISP, the following parameters are computed:

$$T_E(i) = \frac{BL(i) \cdot 8}{B_{AL}(i) - B_{Um}(i) \cdot \Delta_{OverHead}} \tag{11}$$

$$T'_E(i) = \frac{T_E(i) - T_E(i-1)}{t_i - t_{i-1}} \tag{12}$$

Based on these parameters, a decision is made on whether to switch or not the encoding used for the media stream. If we define the positive constants **L** and **H**, the criterion can be formulated as follows:
**if** $T_E(i) > 0$ then "Change Encoding (Quality Downgrade)"
**else** if $T_E'(i) < -L$ then "Change Encoding (Quality
Downgrade)"      (13)
      **if** $T_E'(i) > H$ then "Change Encoding (Quality Upgrade)".
The meaning of the previous conditions is: if the application buffer is getting empty or if the available bandwidth is rapidly decreasing, then change the encoding (quality downgrade) used for the media application. If available bandwidth is rapidly increasing then change the encoding (quality upgrade).

## APPENDIX 1

**ABBREVIATIONS**

| | |
|---|---|
| 3GPP | 3rd Generation Partnership Project |
| ADSL | Asymmetric Digital Subscriber Line |
| AL | Application Layer |
| ATS | Allocated Time Slots |
| AuC | Authentication Centre |
| BCCH | Broadcast Control Channel |
| BER | Bit Error Rate |
| BL | Buffer Level |
| BLER | Block Erasure Rate |
| BLS | Buffer Level in Seconds |
| BSC | Base Station Controller |
| BTS | Base Transceiver Station |
| CAMEL | Customised Application for Mobile network Enhanced Logic |
| CAP | Camel Application Part |
| CCITT | Comité Consultatif International Télégraphique et Téléphonique |
| CCN | Cell Change Notification |
| C/I | the received Carrier to Interference power ratio |
| CSE | Camel Service Environment |
| DLL | Data Link Layer |
| DLSR | Delay Since Last SR |
| E2E | End to End |
| (E)GPRS | Enhanced General Packet Radio Service |
| EIR | Equipment Identity Register |
| FEC | Forward Error Correction |
| FER | Frame Error Rate |
| FRR | Fast Receiver Report |
| FTP | File Transfer Protocol |
| GERAN | GSM/EDGE Radio Access Network |

| | |
|---|---|
| GGSN | Gateway GPRS Support Node |
| GMSC | Gateway MSC |
| GPRS | General Packet Radio Service |
| HLR | Home Location Register |
| HTML | HyperText Markup Language |
| HTTP | Hyper Text Transport Protocol |
| IETF | Internet Engineering Task Force |
| ISDN | Integrated Service Digital Network |
| ISP | Internet Service Provider |
| IWF | Interworking Function |
| LL-PDU | Logical Link- Packet Data Unit |
| LSR | Last SR Timestamp |
| MPEG | Motion Picture Expert's Group |
| MR | Measurement Result |
| MS | Mobile Station |
| PBL | Preferred Buffer Level |
| PBLS | Preferred Buffer Level in Seconds |
| PDA | Packet Data Acknowledge |
| PHL | Physical Layer |
| PMP | Point-to-Multipoint |
| QoS | Quality of Service |
| RAT | Radio Access Technology |
| RF | Radio Frequency |
| RNC | Radio Network Controller |
| RR | Receiver Report |
| RTCP | RTP Control Protocol |
| RTP | Real Time Transport Protocol |
| RTSP | Real Time Streaming Protocol |
| SDP | Session Description Protocol |
| SFS | Start Fast Signalling |
| SGSN | Serving GPRS Support Node |
| SP | Service Provider |
| SR | Sender Report |

| | |
|---|---|
| SSRC | Synchronisation Source |
| TC | TransCoder |
| TCP | Transmission Control Protocol |
| TFRR | Trigger Fast Receiver Report message |
| TL | Transport Layer |
| TLastFRR | Trigger Last Fast Receiver Report message |
| UCS | User Coding Scheme |
| UDP | User Datagram Protocol |
| UE | User Equipment |
| UMTS | Universal Mobile Telecommunication System |
| USIM | UMTS Subscriber Identity Module |
| UTRAN | UMTS Terrestrial Radio Access Network |
| URL | Uniforn Resource Locator |
| VLR | Visitor Location Register |
| WAP | Wireless Application Protocol |
| WLAN | Wireless Local Area Netwok |

## APPENDIX 2

## CITED REFERENCES

[1]: "RTP: A transport Protocol for Real Time Applications", IETF RFC 3550, July 2003;

[2]: I. Busse B. Deffner, H. Schulzrinne, "Dynamic QoS Control of Multimedia Applications based on RTP", May 30, 1995;

[3]: H. Montes, G. Gomez, R. Cuny, J. F. Paris, "Deployment of IP Multimedia Streaming Services In Third-Generation Mobile Networks", IEEE Wireless Communications, October 2002;

[4]: H. Montes, G. Gomez, D. Fernandez, "An End to End QoS Framework for Multimedia Streaming Services in 3G Networks", PIMRC 2002;

[5]: 3GPP TSG Service and System Aspects, "Transparent End-to-End PS Streaming Services (PSS); Protocols and Codecs", Rel4, TR 26.234 v4.2.0, 2001.

[6]: 3GPP TS 44.060 V6.2.0 (2003-04); Technical Specification; 3rd Generation Partnership Project; Technical Specification Group GSM/EDGE Radio Access Network; General Packet Radio Service (GPRS); Mobile Station (MS) - Base Station System (BSS) interface; Radio Link Control/Medium Access Control (RLC/MAC) protocol; (Release 6);

[7]: 3GPP TS 45.008 V6.2.0 (2003-04); Technical Specification; 3rd Generation Partnership Project; Technical Specification Group GSM/EDGE; Radio Access Network; Radio subsystem link control (Release 6).

**Claims**

1. Signalling procedure in wireless networks according to the rules of an open communication model foreseen protocol stacks are at the interfaces between network elements, the stacks including hierarchical Layers, whose general meaning is known, listed top-down as: Application (AL), Transport (TL), Data Link (DLL), Physical (PHL) for supporting the playback of streaming services, transmitted by a Service Provider (SP, ISP) to wireless subscriber/s (MS) through the messages of a real-time protocol (RTP/RTCP) at Transport Layer (TL) also including ordinary Receiver Reports (RR) feedback to the Service Provider by the subscriber/s (MS) at a rate set by default, and said Receiver Reports (RR) including measurement values of parameters (MR) indicative of the QoS at the subscriber side during the ongoing session, so that the Provider adapts the QoS of the streaming service E2E, accordingly, **characterised in that** includes the following steps performed at the wireless subscriber side:

    a) detecting concurrently with said real-time protocol if a first condition depending on the measured parameters (MR) comes true for indicating that the QoS at the subscriber side (MS) is degrading to an attention level, and when this first condition applies, sending, at Data Link Layer (DLL), a command (SFS) to the Transport Layer (TL) to switch towards the sending of upgraded Receiver Reports (FRR) triggered and updated at Data Link Layer (DLL) at a rate faster than said default one;
    b) detecting concurrently with the faster signalling (FRR) if a second condition depending on said measured parameters (MR) comes true for indicating that the QoS at the subscriber side (MS) is raised over a threshold greater than said attention level, and when this second condition applies, sending, at Data Link Layer (DLL), a command (TLastFRR) to the Transport Layer (TL) to reinstate the ordinary receiver reports (RR) at the default rate.

2. The procedure of the preceding claim, **characterised in that** said faster rate is equal to the measurement reporting (MR) rate from the Physical Layer (PHL).

3. The procedure of one of the preceding claims, **characterised in that** said first and second conditions are tested at Physical Layer (PHL).

4. The procedure of one of the preceding claims, **characterised in that** said upgraded received reports (FRR) include additional information on the actual value of the available service bandwidth ($B_{Um}$) at the subscriber side (MS) .

5. The procedure of the preceding claim, **characterised in that** said upgraded received reports (FRR) include additional information on the actual filling in level (BL) of a delay compensating buffer managed at the Application Layer (AL) at the subscriber side (MS) for accommodating the incoming data and play-backing the streaming service.

6. The procedure of the preceding claim, **characterised in that** said upgraded receiver reports (FRR) are obtained at step **a)** by the following sequential steps:

    - every time a measurement reporting (MR) is received at Data Link Layer (DLL), a first inter-protocol message (TFRR) including said actual value of the available service bandwidth ($B_{Um}$) is sent from this Layer to the Transport Layer (TL);
    - every time the first inter-protocol message (TFRR) is received at Transport Layer TL), a second inter-protocol message (GetBL) is sent from this Layer to the Application Layer (AL) to have returned information on the state of the Application buffer (BL);
    - every time the second inter-protocol message (GetBL) is received at Application Layer (AL), a third inter-protocol message (BL) including the actual value of the buffer level (BL) is sent back from this Layer to the Transport Layer (TL);
    - every time the third inter-protocol message (BL) is received at Transport Layer (TL), said upgraded receiver reports (FRR) is obtained by integrating all information included in ordinary receiver reports (RR) and the information transferred at the Transport Layer (TL) by the first (TFRR) and third (BL) inter-protocol messages.

7. The procedure of one of the preceding claims, **characterised in that** the following steps are further executed:

    - detecting concurrently with said faster signalling (FRR) if a condition for triggering a cell reselection procedure which depends on said measured parameters (MR) comes true after than said first condition is not more verified due to a QoS worsening under said attention level;
    - suspending in the affirmative case the sending of the faster signalling (FRR) and entering a handshake phase (CCN, PDA) with the network (BSC) for selecting a new serving cell; then
- generating a command (TLastFRR) towards the Transport Layer (TL) to terminate the sending of said faster signalling (FRR) and reinstating the ordinary receiver reports (RR) with the default rate.

8. The procedure of one of the preceding claims, **characterised in that** said wireless network is connected to the Internet Network IP-PDN) and the Service Provider (ISP) transmits streaming services through the Internet Network IP-PDN).

# RTP/RTCP PROTOCOL STACKS:
# (KNOWN ART)

**Client**

**ISP**

| Application | | Application |

QoS Control Messaging

RTP Data / RTCP SR ←

| Transport | | Transport |

RTCP RR →

| Data Link Client | | Data Link ISP |

Ic ... **Wired-Wireless Network** ... Is

| Physical Client | | Physical ISP |

# FIG. 1

EP 1 528 722 A1

# BANDWIDTH AND BUFFER LENGTH EVOLUTIONS AT THE MS SIDE IN CASE OF CELL RESELCTION (KNOWN ART)

**FIG. 2**

**FIG. 3**

EP 1 528 722 A1

# MULTI-RAT PLMN (3G + EGSM/GPRS)

FIG. 4

EP 1 528 722 A1

# RTP/RTCP PROTOCOL STACKS:
# BEGIN OF THE FAST SIGNALLING PHASE

**FIG. 5**

EP 1 528 722 A1

# RTP/RTCP PROTOCOL STACKS: FAST SIGNALLING PHASE ONGOING

**Client**

**ISP**

Application

Inter-protocol messages make Transport Layer aware about the amount of media file cached at client Application Layer

Application

QoS Control Messaging

RTP Data / RTCP SR

Transport

RTCP FRR

Transport

Data Link Client

Data Link ISP

Ic

Is

Physical Client

**Wired-Wireless Network**

Physical ISP

**Physical Layer Condition commands periodic inter-protocol messages sent from Data Link Layer to Transport Layer**

**Inter-protocol messages make Transport Layer aware about Um bandwidth evolution**

**Each Inter-protocol message triggers an E2E RTCP FRR message. FRR carries information about Um/Uu bandwidth and application buffer state**

## FIG. 6

EP 1 528 722 A1

# FAST RECEIVER REPORT (FRR)
# TYPE OF MESSAGE

| V | P | RC | PT = 201 | Length |
|---|---|---|---|---|
| SSRC of the sender ||||| 
| SSRC of the first source ||||| 
| Fract. Lost || Cum. No. of packets lost ||| 
| Ext. highest seq. Number received ||||| 
| Interarrival Jitter estimate ||||| 
| Last sender report timestamp (LSR) ||||| 
| Delay since last sender report (DLSR) ||||| 
| Actual $B_{Um}$ [kbit/s] || BL [Bytes] ||| 
| .................................. ||||| 
| .................................. ||||| 
| Last reception report block ||||| 

## FIG. 7

EP 1 528 722 A1

# FAST FRR SIGNALLING IN CASE OF CELL RESELCTION

**FIG. 8a**

EP 1 528 722 A1

# FAST FRR SIGNALLING IN CASE OF TRANSIENT RF FADING

**FIG. 8b**

# BANDWIDTH AND BUFFER LENGTH EVOLUTION AT THE MS SIDE IN CASE OF CELL RESECTION WITH FAST SIGNALLING RTCP

## FIG. 9a

# BANDWIDTH AND BUFFER LENGTH EVOLUTION AT THE MS SIDE IN CASE OF TRANSIENT RF WORSENING COUNTERACTED BY FRR

## FIG. 9b

EP 1 528 722 A1

**European Patent Office**

# EUROPEAN SEARCH REPORT

Application Number

EP 03 42 5705

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | J.OTT, S. WENGER, N. SATO, C. BURMEISTER, J. REY: "Extended RTP Profile for RTCP-based Feedback (RTP/AVPF); draft-ietf-avt-rtcp-feedback-07.txt" IETF INTERNET-DRAFT, 6 June 2003 (2003-06-06), pages 1-51, XP002276758 * abstract * * page 3, line 16 - page 6, line 23 * * page 8, line 8 - page 10, line 25 * --- | 1-8 | H04L12/56 H04L29/06 |
| A | T. FRIDMAN, R. CACERES, A. CLARK: "RTP Control Protocol Extended Reports (RTCP XR), draft-ietf-avt-rtcp-report-extns-06.txt" IETF, INTERNET ENGINEERING TASK FORCE ,AUDIO/VIDEO TRANSPORT WORKING GROUP, 19 May 2003 (2003-05-19), XP002276759 * page 3, line 5 - page 6, line 47 * * page 36, line 1 - line 22 * --- | 4,5 | |
| A,D | MONTES H ET AL: "DEPLOYMENT OF IP MULTIMEDIA STREAMING SERVICES IN THIRD-GENERATION MOBILE NETWORKS" IEEE WIRELESS COMMUNICATIONS, IEEE SERVICE CENTER, PISCATAWAY, NJ, US, vol. 9, no. 5, October 2002 (2002-10), pages 84-92, XP001132260 ISSN: 1070-9916 * the whole document * --- -/-- | 1 | TECHNICAL FIELDS SEARCHED (Int.Cl.7) H04L |

The present search report has been drawn up for all claims

| Place of search | Date of completion of the search | Examiner |
|---|---|---|
| MUNICH | 14 April 2004 | Rüschmann, F |

EPO FORM 1503 03.82 (P04C01)

**European Patent Office**

## EUROPEAN SEARCH REPORT

Application Number

EP 03 42 5705

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | MONTES H ET AL: "AN END-TO-END QOS MANAGEMENT FRAMEWORK FOR STREAMING SERVICES IN 3G MOBILE NETWORKS" PROCEEDINGS OF THE IASTED INTERNATIONAL CONFERENCE ON WIRELESS AND OPTICAL COMMUNICATIONS, XX, XX, 17 July 2002 (2002-07-17), pages 404-409, XP008016522 * the whole document * --- | 1 | |
| A,D | H. SCHULZRINNE, S. CASNER, R. FREDERICK, V. JACOBSON: "RFC 3550 RTP: A Transport Protocol for Real-Time Applications" IETF NETWORK WORKING GROUP , July 2003 (2003-07), pages 1-104, XP002276760 * page 4, line 1 - page 5, line 27 * * page 8, line 10 - line 30 * * page 19, line 29 - page 27, line 43 * | 1-8 | |
| A | -& H. SCHULZRINNE, S. CASNER, R. FREDERICK, V. JACOBSON: "draft-ietf-avt-rtp-new-12.txt RTP: A Transport Protocol for Real-Time Applications" IETF NETWORK WORKING GROUP, July 2003 (2003-07), pages 1-2, XP002276761 * the whole document * ----- | 1 | TECHNICAL FIELDS SEARCHED (Int.Cl.7) |

The present search report has been drawn up for all claims

| Place of search | Date of completion of the search | Examiner |
|---|---|---|
| MUNICH | 14 April 2004 | Rüschmann, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)